# EUROPEAN PATENT APPLICATION

(11) **EP 2 062 940 A1**
(43) Date of publication of application: **27.05.2009**
(21) Application number: 08168435.9
(22) Date of filing: 06.11.2008
(51) Int. Cl.: C08L 95/00, C08F 297/04

(54) **Composition of asphalt containing tapered block copolymer**

(30) Priority: 21.11.2007 KR 20070119425
(71) Applicant: Korea Kumho Petrochemical Co., Ltd., Jongno-gu Seoul 110-713 (KR)
(72) Inventor: Kim, Sam Min, Yuseong-gu 305-720, Daejeon (KR); Na, Dong Hyuk, Yuesong-gu 305-720, Daejeon (KR); Lee, Dae Hyung, Yuseong-gu 305-720, Daejeon (KR)
(74) Representative: Weber, Roland

(57) **Abstract**

Disclosed is a modified asphalt composition comprising asphalt and a tapered block copolymer, which contains short butadiene monomer blocks at both ends of aromatic vinyl monomer blocks, that provides comparable or better softening point when compared to conventional compositions, and exhibits superior ductility at low temperature, thereby being applicable to road paving, waterproof sheets and sealants.

## Description

### CROSS-REFERENCE TO RELATED APPLICATION

This application claims, under 35 U.S.C. §119(a), the benefit of Korean Patent Application No. 10-2007-0119425 filed on November 21, 2007, the entire disclosure of which is hereby incorporated by reference.

### BACKGROUND

### (a) Technical Field

The present invention relates to a modified asphalt composition comprising asphalt and a tapered block copolymer, which has short butadiene monomer blocks at both ends of aromatic vinyl monomer blocks, that provides comparable or better softening point when compared to conventional compositions, and exhibits superior ductility at low temperature, thereby being applicable to road paving, waterproof sheets and sealants.

### (b) Background Art

In general, unmodified asphalt is very sensitive to temperature during road paving or manufacturing of waterproof sheets. That is, at high temperature, plastic deformation may occur easily due to temperature or load. And, at low temperature, cracking may occur due to accumulated load and repeated expansion and contraction caused by abrupt temperature change. Further, even after road paving, resistance to plastic deformation, temperature sensitivity, fatigue crack, cold crack, etc. may be deteriorated significantly as time goes by, depending on traffic volume.

Recently, asphalt modified by adding polymers is used to solve this problem. For instance, researches on such polymers as low density polyethylene, ethylene vinyl acetate, styrene-butadiene rubber, butyl rubber, etc. for improving resistance to plastic deformation at high temperature caused by softening and preventing cracks at low temperature caused by external stress and repeated expansion and contraction are carried out, and practically applied on roads.

U.S. Patent No. 3,985,694 (1976. 10. 12., Richard J. Petrucco, et al.) and U.S. Patent No. 4,130,516 (1978. 12. 19.. Duane W. Gagie, et al.) disclose an asphalt/polymer composition with improved properties comprising asphalt and a thermoplastic elastomer such as linear polyethylene, ethylene vinyl acetate or styrene-butadiene rubber.

U.S. Patent No. 3,345,316 discloses an asphalt composition prepared by adding 10 to 30 parts by weight of a thermoplastic elastomer such as a linear styrene-butadiene-styrene triblock copolymer or a styrene-ethylene-butylene-styrene block copolymer obtained by anionic polymerization to a chlorinated polyphenylene resin, without the necessity for a vulcanizing treatment or vulcanizing agent. It mentions that the resultant composition is economically advantageous and provides improved compatibility between asphalt and polymers.

U.S. Statutory Invention Registration No. H1580 discloses an asphalt composition comprising a radial styrene-butadiene-styrene block copolymer with improved processability, softening point and processing stability and sustained viscosity. It is mentioned that the asphalt composition is useful for roofing, coating, hot melt asphalt concrete, sealant, and the like.

U.S. Patent No. 4,130,516 discloses an asphalt composition comprising asphalt, sulfur and a polymer. The polymer is included in an amount of 1 weight % and may be either natural rubber or synthetic rubber. But, whereas the addition of a radial styrene-butadiene random copolymer does not provide improved ductility, a linear styrene-butadiene random copolymer results in improved ductility.

U.S. Patent No. 5,130,354 discloses an asphalt composition containing a polymer modifier having a polar group with improved ductility and adhesion to polar materials. It is mentioned that a butadiene rubber or a styrene-butadiene-styrene triblock copolymer wherein the conjugated diene portion of the polymer is grafted using a silane compound or maleic anhydride may be used.

In U.S. Patent No. 4,443,570, wherein a styrene-ethylene-butylene-styrene block copolymer, which is a hydrogenated saturated polymer, is used as asphalt modifier, an asphalt composition comprising asphalt, an organic solvent, amorphous silica and the styrene-ethylene-butylene-styrene block copolymer is disclosed, which has desirable softening point of about 140 °F and has improved pliability property at low temperatures.

U.S. Patent No. 4,412,019 discloses an asphalt composition comprising asphalt, sulfur and a styrene-ethylene-butylene-styrene block copolymer, wherein the addition amount of the styrene-ethylene-butylene-styrene block copolymer, which is a polymer modifier, is increased to improve ductility and tensile strength at low temperature.

Korean Patent Publication No. 2002-0013709 presents an example of using a mixture composition of a linear styrene-butadiene-styrene triblock copolymer and a radial styrene-butadiene-styrene triblock copolymer as asphalt modifier. It mentions that, by adding a linear styrene-butadiene-styrene triblock copolymer and a radial styrene-butadiene-styrene triblock copolymer at a proportion of 40 to 100 and 60 to 0, respectively, based on weight to asphalt, a modified asphalt composition with superior solubility, storage stability at high temperature, ductility and tenacity, and well-balanced adhesion and softening properties can be obtained.

The polymer-modified asphalt used for road paving described above is known to be very effective in improving such physical properties as high temperature performance, low temperature performance, aging resistance, resistance to plastic deformation, and the like, as compared to pure asphalt binder. The increased viscosity and consequent improved flow resistance at high temperature provides, improved impact and crack resistance at low temperature, and improved aging resistance against light and contact with air are attained because the added polymer components form a polymer and strengthen the asphalt matrix.

In the evaluation of crack resistance at low temperature, ductility plays a critical role. High ductility results in increased flexibility of modified asphalt particularly at low temperature, thereby significantly reducing fatigue caused by loads or crack due to thermal expansion and contraction. Accordingly, ductility can be considered as an important factor in evaluating crack resistance caused by loads particularly in cold regions.

In such materials as waterproof sheets, polymers are often used to prevent damage and cracks caused by expansion and contraction when handling at low temperature area. In low temperature area, the evaluation of low temperature performance is important with regard to preventing damages [KSF 4917, 6.7 Pliability].

In general, polymer modified asphalt has improved flexibility and reduced temperature sensitivity at low temperature, and improved flow resistance and restricted deformation at high temperature. In addition, it has improved tensile strength, stiffness, tenacity, adhesion to aggregate and, thus, prevents the breakage of paving caused by the flow of aggregate.

Different polymers give different effects on the improvement of stability at low temperature. Even similar polymers may result in different improving effect on the resistance to the temperature sensitivity, depending on the polymer structure.

Conventionally, a polyolefin, a styrene-butadiene random copolymer rubber or a styrene-butadiene block copolymer rubber have been mainly added to asphalt as polymer modifier. Especially, a styrene-butadiene random copolymer rubber or a styrene-butadiene block copolymer rubber is known to increase ductility and thereby retard the crack and breakage of asphalt at low temperature due to repeated expansion and contraction. Also, asphalt compositions using wasted tire crumb crushed at extremely low temperature as a modifier are utilized. In spite of economical advantage, they are known to have worse high temperature and low temperature performance than styrene-butadiene block copolymer rubbers, on the whole.

In addition, an ethylene-propylene diene rubber is used. But, it is used only limitedly because of high melt temperature and is costly. Further, amine compounds or sulfur compounds are used to prevent phase separation between asphalt and the polymer modifier at high temperature, and polymers substituted with polar groups are used, too.

As described, the improvement of the properties of an asphalt composition by the addition of a polymer is largely affected by the properties of the added polymer. Hence, there is a consistent need for the development of polymers as a modifier of asphalt in order to provide better properties, including ductility.

### SUMMARY OF THE DISCLOSURE

The present invention has been made in an effort to solve the above-described problems associated with the prior art.

The present invention provides a modified asphalt composition with very superior ductility at low temperature, while having comparable or better high temperature performance when compared to conventional modified asphalt compositions. More specifically, the present invention provides a modified asphalt composition using a tapered styrene-butadiene-styrene block copolymer having short butadiene blocks at both ends of styrene blocks of the polymer as a modifier and offering improved ductility at low temperature along with a high softening point at high temperature, thereby providing good temperature stability.

In a preferred embodiment, the present invention provides a modified asphalt composition comprising 100 parts by weight of asphalt and 0.5 to 40 parts by weight of a block copolymer represented by the following formula (1):

A₁-B₁-X-B₂-A₂ (1)

wherein A₁ and A₂ are respectively a polymer block comprising an aromatic vinyl monomer, B₁ and B₂ are respectively a polymer block comprising a butadiene monomer, X is a coupling agent, and the block ratio of A is from 70 to 95 %.

The modified asphalt composition of the present invention in which a tapered block copolymer having short butadiene monomer blocks at both ends of aromatic vinyl monomer blocks is used as a modifier, has very superior ductility at low temperature while having comparable or better properties when compared to conventional modified asphalt compositions containing linear or radial styrene-butadiene-styrene triblock copolymers, and is applicable to road paving, waterproof sheets and sealants.

### DETAILED DESCRIPTION

Reference will now be made in detail to the preferred embodiments of the present invention.

The present invention relates to a asphalt modifier composition comprising asphalt and a tapered block copolymer having short butadiene monomer blocks at both ends of aromatic vinyl monomer blocks as a modifier.

Hereinafter, the modified asphalt composition according to the present invention is described in further detail.

In the present invention, a block copolymer represented by the following formula (1) is used as asphalt modifier:

A₁-B₁-X-B₂-A₂ (1)

In the formula (1), A₁ and A₂, which may be the same of different, are respectively a polymer block having an aromatic vinyl monomer. Specifically, the aromatic vinyl monomer may be at least one selected from styrene, α-methylstyrene, *o-*methylstyrene, *p*-methylstyrene and *p*-*tert*-butylstyrene. Styrene is preferred.

The block ratio of A₁ and A₂, that is the proportion of the aromatic vinyl monomer present as blocks in the entire aromatic vinyl monomer is maintained at 70 to 95 %. A block ratio lower than 70 % may result in problem in the formation of styrene domain in the triblock, thereby reducing tensile strength. A block ratio higher than 95 % is not only difficult to attain, but also commercially undesirable since the reaction time is extended. Hence, the aforesaid range is preferred.

The number average molecular weight of A₁ and A₂ is maintained respectively from 4,500 to 15,000, preferably from 10,000 to 12,500. A number average molecular weight smaller than 4,500 may result in problem in the formation of styrene domain, thereby deteriorating mechanical properties. And, a number average molecular weight exceeding 15,000 may result in reduced ductility and loss of rubber property. Hence, the aforesaid range is preferred.

Per 100 parts by weight of the total block copolymer, the aromatic vinyl monomers A₁ and A₂ are used in the amount of from 15 to 40 parts by weight, preferably 20 to 30 parts by weight. A content less than 15 parts by weight may result in problem in the formation of styrene domain, thereby deteriorating mechanical properties. And, a content exceeding 40 parts by weight may result in loss of rubber property. Hence, the aforesaid range is preferred.

B₁ and B₂ are respectively a polymer block having a butadiene monomer, and has a number average molecular weight in the range from 35,000 to 45,500, preferably from 35,000 to 40,000. A number average molecular weight smaller than 35,000 may result in reduced ductility because of excessive styrene content. And, a number average molecular weight exceeding 45,500 may result in deteriorated mechanical properties due to insufficient styrene content. Hence, the aforesaid range is preferred.

Per 100 parts by weight of the total block copolymer, B₁ and B₂ are used in the amount of from 70 to 90 parts by weight, preferably 70 to 80 parts by weight. A content less than 70 parts by weight may result in loss of rubber property and reduced ductility. And, a content exceeding 90 parts by weight may result in deteriorated mechanical properties. Hence, the aforesaid range is preferred.

X is a coupling agent. The coupling agent may be one commonly used in the related art and is not particularly restricted. Specifically, dichlorodisilane, dichlorodimethylsilane, 1,1-dichlorosilethane, dichloroethylmethylsilane, dichlorodiethylsilane, dichloromethylpropylsilane, 1,2-dichlorotetramethyldisilane, etc. may be used. Preferably, dichlorodisilane, dichlorodimethylsilane, etc. are used. Preferably, the coupling agent is used in the amount of from 40 to 60 weight % based on the polymerization initiator. When the content is outside the range, a non-coupled portion may take up 20 % or more, which leads to deteriorated mechanical properties. Hence, the aforesaid range is preferred.

The number average molecular weight of the block copolymer is maintained at 50,000 to 300,000, preferably at 70,000 to 150,000. A number average molecular weight smaller than 50,000 may result in deteriorated mechanical properties. And, a number average molecular weight exceeding 300,000 may result in poor processability.

The block copolymer is prepared by the method commonly used in the related art. Specifically, the block copolymer is typically prepared by continuous polymerization in the presence of an anionic initiator such as an organolithium compound.

The anionic polymerization is performed under nitrogen atmosphere, in anhydrous condition. For the solvent, one which does not react with anions is used. The polymerization is performed at a reaction temperature of at least 40 °C. Preferably, tetrahydrofuran is used as reaction solvent and the concentration is controlled below 500 ppm for better block ratio control.

The present invention is also characterized by a modified asphalt composition comprising 100 parts by weight of asphalt and 0.05 to 40 parts by weight, preferably 1 to 25 parts by weight, of the aforesaid block copolymer. When the polymer copolymer is contained less than 0.05 part by weight, the polymer may not function as a modifier of asphalt. And, when the content exceeds 40 parts by weight, the resultant modified asphalt may have poor dispersing and flow properties due to excessively high viscosity, and the retarded dispersing may result in thermal decomposition of the asphalt binder and mechanical decomposition thereof due to shear stress.

Sulfur may be added during the preparation of the modified asphalt composition, in order to control phase separation. Per 100 parts by weight of the block copolymer, sulfur may be used in the amount of from 0 to 20 parts by weight, preferably 0 to 10 parts by weight. A sulfur content exceeding 20 parts by weight may result in gelation and phase separation. Hence, the aforesaid range is preferred.

Thus prepared modified asphalt composition exhibits significantly improved ductility at low temperature, while maintaining comparable or better properties, including softening point and molecular weight, when compared to those of conventional compositions. Accordingly, it provides improved stability at low temperature.

### EXAMPLES

The following examples illustrate the present invention but they should not be construed as limiting the scope of the present invention.

Preparation Example 1: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 30 g of styrene and 3.8 g of butadiene were charged in the autoclave and the temperature was maintained at 60 °C. A cyclohexane solution (1.3 M) of 3.0 mmol of *n*-butyllithium (BuLi) was added to the autoclave as polymerization initiator. 2 minutes after the polymerization temperature reached highest, 120 g of butadiene was added. Then, 3 minutes after the butadiene polymerization temperature reached highest, 1.5 mmol of dichlorodisilane was added as coupling agent. A styrene-butadiene-styrene copolymer blend was obtained with a coupling efficiency of 89 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 25,000. Number average molecular weight of butadiene was 100,000. And, number average molecular weight of the block copolymer was 125,000. From the change of polymerization temperature during the reaction and through NMR and GPC, the existence of short butadiene groups was identified.

Preparation Example 2: Preparation of tapered styrene-butadiene-styrene block copolymer having short butadiene blocks at both ends of styrene blocks of the polymer The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.8 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.9 mmol of dichlorodisilane was added as coupling agent. A styrene-butadiene-styrene copolymer blend was obtained with a coupling efficiency of 74 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 21,000. Number average molecular weight of butadiene was 63,000. And, number average molecular weight of the block copolymer was 84,000. From the change of polymerization temperature during the reaction and through NMR and GPC, the existence of short butadiene groups was identified.

Preparation Example 3: Preparation of tapered styrene-butadiene-styrene block copolymer having short butadiene blocks at both ends of styrene blocks of the polymer The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.8 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.9 mmol of dichlorodisilane was added as coupling agent. A styrene-butadiene-styrene copolymer blend was obtained with a coupling efficiency of 81 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 21,000. Number average molecular weight of butadiene was 63,000. And, number average molecular weight of the block copolymer was 84,000. From the change of polymerization temperature during the reaction and through NMR and GPC, the existence of short butadiene groups was identified.

Preparation Example 4: Preparation of tapered styrene-butadiene-styrene block copolymer having short butadiene blocks at both ends of styrene blocks of the polymer The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.8 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.9 mmol of dichlorodisilane was added as coupling agent. A styrene-butadiene-styrene copolymer blend was obtained with a coupling efficiency of 87%. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 21,000. Number average molecular weight of butadiene was 63,000. And, number average molecular weight of the block copolymer was 84,000. From the change of polymerization temperature during the reaction and through NMR and GPC, the existence of short butadiene groups was identified.

Preparation Example 5: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.90 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.9 mmol of dichlorodisilane was added as coupling agent. A styrene-butadiene-styrene copolymer blend was obtained with a coupling efficiency of 89 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 21,250. Number average molecular weight of butadiene was 63,750. And, number average molecular weight of the block copolymer was 85,000. From the change of polymerization temperature during the reaction and through NMR and GPC, the existence of short butadiene groups was identified.

Preparation Example 6: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.8 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.9 mmol of dichlorodisilane was added as coupling agent. A styrene-butadiene-styrene copolymer blend was obtained with a coupling efficiency of 95 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 22,000. Number average molecular weight of butadiene was 66,000. And, number average molecular weight of the block copolymer was 88,000. From the change of polymerization temperature during the reaction and through NMR and GPC, the existence of short butadiene groups was identified.

Preparation Example 7: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.6 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.8 mmol of dichlorodisilane was added as coupling agent. A styrene-butadiene-styrene copolymer blend was obtained with a coupling efficiency of 87 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 23,250. Number average molecular weight of butadiene was 69,750. And, number average molecular weight of the block copolymer was 93,000. From the change of polymerization temperature during the reaction and through NMR and GPC, the existence of short butadiene groups was identified.

Preparation Example 8: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.5 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.8 mmol of dichlorodisilane was added as coupling agent. A styrene-butadiene-styrene copolymer blend was obtained with a coupling efficiency of 87 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 23,500. Number average molecular weight of butadiene was 70,500. And, number average molecular weight of the block copolymer was 94,000. From the change of polymerization temperature during the reaction and through NMR and GPC, the existence of short butadiene groups was identified.

Preparation Example 9: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.4 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.7 mmol of dichlorodisilane was added as coupling agent. A styrene-butadiene-styrene copolymer blend was obtained with a coupling efficiency of 86 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 24,500. Number average molecular weight of butadiene was 74,500. And, number average molecular weight of the block copolymer was 98,000. From the change of polymerization temperature during the reaction and through NMR and GPC, the existence of short butadiene groups was identified.

Preparation Example 10: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 2.6 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.3 mmol of dichlorodisilane was added as coupling agent. A styrene-butadiene-styrene copolymer blend was obtained with a coupling efficiency of 89%. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 30,500. Number average molecular weight of butadiene was 91,500. And, number average molecular weight of the block copolymer was 122,000. From the change of polymerization temperature during the reaction and through NMR and GPC, the existence of short butadiene groups was identified.

Preparation Example 11: Preparation of tapered styrene-butadiene-styrene block copolymer having short butadiene blocks at both ends of styrene blocks of the polymer

The inside atmosphere of a 2-L autoclave was sufficiently substituted with argon gas. 900 g of purified cyclohexane, 37.5 g of styrene and 3.8 g of butadiene were charged in the autoclave and the temperature was maintained at 60 °C. A cyclohexane solution (1.3 M) of 3.2 mmol of *n*-butyllithium (BuLi) was added to the autoclave as polymerization initiator. 2 minutes after the polymerization temperature reached highest, 109 g of butadiene was added. Then, 3 minutes after the butadiene polymerization temperature reached highest, 1.6 mmol of dichlorodisilane was added as coupling agent. A styrene-butadiene-styrene copolymer blend was obtained with a coupling efficiency of 88 %. Polymerization was terminated 2 minutes after the polymerization temperature reached highest. The termination was carried out by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 30,900. Number average molecular weight of butadiene was 72,100. And, number average molecular weight of the block copolymer was 103,000. From the change of polymerization temperature during the reaction and through NMR and GPC, the existence of short butadiene groups was identified.

Comparative Preparation Example 1: Preparation of linear styrene-butadiene-styrene copolymer

The inside atmosphere of a 2-L autoclave was sufficiently substituted with argon gas. 900 g of purified cyclohexane and 62 g of styrene were charged in the autoclave and the temperature was maintained at 60 °C. A cyclohexane solution (1.3 M) of 4.0 mmol of *n*-butyllithium (BuLi) was added to the autoclave as polymerization initiator. 5 minutes after the polymerization temperature reached highest, 138 g of butadiene was added. Then, 3 minutes after the butadiene polymerization temperature reached highest, 2.0 mmol of dichlorodisilane was added as coupling agent. A styrene-butadiene-styrene copolymer blend was obtained with a coupling efficiency of 86 %. Polymerization was terminated 2 minutes after the polymerization temperature reached highest. Then, an antioxidant was added and the same procedure as in Preparation Example 1 was carried out.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 32,550. Number average molecular weight of butadiene was 72,450. And, number average molecular weight of the block copolymer was 105,000.

Comparative Preparation Example 2: Preparation of radial styrene-butadiene-styrene copolymer

The inside atmosphere of a 2-L autoclave was sufficiently substituted with argon gas. 900 g of purified cyclohexane and 62 g of styrene were charged in the autoclave and the temperature was maintained at 60 °C. A cyclohexane solution (1.3 M) of 4.2 mmol of *n*-butyllithium (BuLi) was added to the autoclave as polymerization initiator. 5 minutes after the polymerization temperature reached highest, 138 g of butadiene was added. Then, 3 minutes after the butadiene polymerization temperature reached highest, 1.0 mmol of tetrachlorodisilane was added as coupling agent. A styrene-butadiene-styrene copolymer blend was obtained with a coupling efficiency of 90 %. Polymerization was terminated 2 minutes after the polymerization temperature reached highest. Then, an antioxidant was added and the same procedure as in Preparation Example 1 was carried out.

From the resultant polymer solution, the solvent was removed using steam and a styrene-butadiene-styrene block copolymer with both styrene ends tapered was obtained in the form of crumb. The remaining solvent and water were removed by roll milling.

Number average molecular weight of styrene was 59,700. Number average molecular weight of butadiene was 139,300. And, number average molecular weight of the block copolymer was 199,000.

Physical properties of the block copolymers prepared in Preparation Examples 1 to 11 and Comparative Preparation Examples 1 and 2 were measured as follows and are summarized in Table 1.

### Physical property measurement

### 1. Molecular weight

Molecular weight analysis was performed using an HPLC separation's module Waters 2690 and a differential refractometer Waters 410 as detector, under the following conditions: column temperature = 41 °C; solvent = THF; flow rate = 1.0 mL/min. The column was prepared by connecting divinylbenzene Styragel HR 5E, HR 4 and HR 2 in series. Detection was performed using standard polystyrene sample. Difference of refractive index was measured.

### 2. Fine structure and contents

Analysis of contents of styrene and butadiene and fine structure was performed using nuclear magnetic resonance analyzers Varian NMR-200 and NMR-400. Chloroform-d was used as solvent for sample analysis.

**Table 1**

| | Styrene content (%) | Block ratio (%) | Average molecular weight (Mₙ) | Coupling efficiency (%) |
|---|---|---|---|---|
| Preparation Example 1 | 20 | 86 | 125,000 | 89 |
| Preparation Example 2 | 25 | 85 | 84,000 | 74 |
| Preparation Example 3 | 25 | 84 | 84,000 | 81 |
| Preparation Example 4 | 25 | 86 | 84,000 | 87 |
| Preparation Example 5 | 25 | 88 | 85,000 | 89 |
| Preparation Example 6 | 25 | 86 | 88,000 | 95 |
| Preparation Example 7 | 25 | 87 | 93,000 | 87 |
| Preparation Example 8 | 25 | 89 | 125,000 | 87 |
| Preparation Example 9 | 25 | 88 | 98,000 | 86 |
| Preparation Example 10 | 25 | 87 | 122,000 | 87 |
| Preparation Example 11 | 25 | 87 | 103,000 | 88 |
| Comparative Preparation Example 1 | 31 | 98 | 105,000 | 86 |
| Comparative 2 Preparation Example 2 | 31 | 96 | 199,000 | 90 |

### Examples

To 600 g of pure asphalt melt at 180 °C, each of the block copolymers prepared in Preparation Examples 1 to 11 and Comparative Preparation Examples 1 and 2 was added in an amount of 4.5 parts by weight per 100 parts by weight of the asphalt. A styrene-butadiene-styrene based modified asphalt composition was prepared by mixing with a high speed shear mixer for 30 minutes.

Physical properties of the resultant modified asphalt compositions were measured and are summarized in Table 2. As for modified asphalt compositions used in road paving, ductility at low temperature is very important. Each of the block copolymer-modified asphalt compositions was poured in a mold for making low temperature ductility test sample and cooled down to prepare a ductility test sample [KS M 2254]. Maintaining temperature at 4 °C using a water bath, the ductility test sample was pulled from both sides at a speed of 3 cm/min. The tensile length when the sample was broken was measured according to KS M 2254. The measurement result is presented in Table 2, along with softening point.

**Table 2**

| | Content of block copolymer (parts by weight)¹⁾ | Softening point (°C) | Ductility (4 °C, cm) |
|---|---|---|---|
| Example 1 | 4.5 | 79.9 | 26.1 |
| Example 2 | 4.5 | 72.9 | 44.3 |
| Example 3 | 4.5 | 79.5 | 52.3 |
| Example 4 | 4.5 | 59.0 | 31.4 |
| Example 5 | 4.5 | 72.9 | 44.3 |
| Example 6 | 4.5 | 61.0 | 25.6 |
| Example 7 | 4.5 | 79.5 | 52.3 |
| Example 8 | 4.5 | 59.7 | 24.1 |
| Example 9 | 4.5 | 61.0 | 25.3 |
| Example 10 | 4.5 | 80.6 | 38.9 |
| Example 11 | 4.5 | 83.2 | 25.7 |
| Comparative Example 1 | 4.5 | 85.3 | 14.7 |
| Comparative Example 2 | 4.5 | 97.0 | 12.4 |
| 1) Parts by weight per 100 parts by weight of asphalt | | | |

As can be seen in Table 2, the modified asphalt compositions of Examples 1 to 11, in which the block copolymers prepared according to the present invention were used as a modifier, exhibited superior properties, as compared to Comparative Examples 1 and 2. Particularly, ductility was significantly improved by at least 50 %.

Comparing Example 9 and Comparative Example 1, ductility was outstandingly improved in Example 9, even though styrene content and molecular weight are similar. It is because of the presence of the short butadiene blocks in the block copolymer. Comparing Comparative Example 1, in which a linear block copolymer was used, and Comparative Example 2, in which a radial block copolymer was used, it can be seen that Comparative Example 2 exhibits superior softening point, but reduced ductility.

To conclude, when the tapered styrene-butadiene-styrene block copolymer having short butadiene blocks at both styrene ends of the block polymer according to the present invention is used as asphalt modifier, ductility at low temperature is increased, thereby improving flexibility of the modified asphalt and reducing fatigue caused by loads or crack due to thermal expansion and contraction. Therefore, the associated asphalt modifier is suitable for road paving. And, when compared with the linear block copolymer, the radial block copolymer offers superior softening point, but very poor ductility.

The invention has been described in detail with reference to the preferred embodiments thereof. However, it will be appreciated by those skilled in the art that changes may be made in these embodiments without departing from the principles and spirit of the invention, the scope of which is defined in the appended claims and their equivalents.

## Claims

1. A modified asphalt composition comprising:
100 parts by weight of asphalt; and
0.5 to 40 parts by weight of a block copolymer represented by the following formula (1):
A₁-B₁-X-B₂-A₂ (1)
wherein A₁ and A₂ are respectively a polymer block comprising an aromatic vinyl monomer, B₁ and B₂ are respectively a polymer block comprising a butadiene monomer, X is a coupling agent, and the block ratio of A is from 70 to 95 %.

2. The composition of claim 1, wherein the block copolymer is contained in the amount of from 1 to 20 parts by weight per 100 parts by weight of asphalt.

3. The composition of claim 1, wherein A₁ and A₂ respectively has a number average molecular weight ranging from 4,500 to 150,00, and B₁ and B₂ respectively has a number average molecular weight ranging from 350,00 to 45,500.

4. The composition of claim 1, wherein the block copolymer represented by the formula (1) has a number average molecular weight ranging from 50,000 to 300,000.

5. The composition of claim 1, wherein the aromatic vinyl monomer is at least one selected from styrene, α-methylstyrene, *o*-methylstyrene, *p*-methylstyrene and *p-tert*-butylstyrene.

6. The composition of claim 1 or claim 5, wherein the aromatic vinyl monomer is styrene.

7. The composition of claim 1, wherein said A₁ and A₂ are comprised in an amount from 15 to 40 parts by weight, based on 100 parts by weight of the block copolymer.

8. The composition of claim 1, wherein the modified asphalt composition is used for road paving, waterproof sheets or sealants.
